# EUROPEAN PATENT APPLICATION

(11) **EP 4 560 929 A2**
(43) Date of publication of application: **28.05.2025**
(21) Application number: 25169250.5
(22) Date of filing: 30.09.2019
(51) Int. Cl.: H04B 7/0404

(54) **METHOD AND APPARATUS FOR DETERMINING SPATIAL DOMAIN TRANSMISSION FILTER**

(62) Divisional of application: 19948074.0
(71) Applicant: GUANGDONG OPPO MOBILE TELECOMMUNICATIONS CORP., LTD., Dongguan, Guangdong 523860 (CN)
(72) Inventor: SHI, Zhihua, No.18 Haibin Road, Wusha, Chang'an Dongguan, Guang, 523860 (CN); ZHANG, Zhi, No.18 Haibin Road, Wusha, Chang'an Dongguan, Guang, 523860 (CN); CHEN, Wenhong, No.18 Haibin Road, Wusha, Chang'an Dongguan, Guang, 523860 (CN); FANG, Yun, No.18 Haibin Road, Wusha, Chang'an Dongguan, Guang, 523860 (CN); HUANG, Yingpei, No.18 Haibin Road, Wusha, Chang'an Dongguan, Guang, 523860 (CN)
(74) Representative: Grassi, Stefano

(57) **Abstract**

Disclosed are a method and an apparatus for determining a spatial domain transmission filter. The method comprises: determining a spatial domain transmission filter of a transmission resource according to the Transmission Configuration Indication (TCI)-State and/or configuration information and/or transmission state configured by the network side. The spatial domain transmission filter of the transmission resource is determined according to the TCI-State and/or configuration information and/or transmission state configured by the network side, such that the spatial domain transmission filter of the transmission resource can be determined without depending on the spatial relationship information, thus solving the technical problem that the spatial domain transmission filter cannot be determined independently of the spatial relationship information.

## Description

### Technical Field

The present application relates to the field of communication technologies, in particular to a method and an apparatus for determining a spatial domain transmission filter.

### Background

In a New Radio system, a network side will instruct a User Equipment (UE) to determine a spatial domain filter for uplink transmission through configured spatial relation information. Although this method for determining a spatial domain transmission filter will provide maximum flexibility for the system in the New Radio system, at the same time it will also bring greater signaling overhead to the system. Hence, the network side may not configure spatial relation information in order to save signaling overhead.

However, in an existing method for determining a spatial domain transmission filter, the spatial domain transmission filter for uplink transmission cannot be determined when spatial relation information is not configured by a network side, so there is a technical problem that the spatial domain transmission filter cannot be determined without relying on the spatial relation information.

### Summary

The present application provides a method and an apparatus for determining a spatial domain transmission filter, which solves the technical problem that the spatial domain transmission filter cannot be determined without relying on the spatial relation information.

In a first aspect, a specific embodiment of the present application provides a method for determining a spatial domain transmission filter, including: determining a spatial domain transmission filter for a transmission resource according to at least one of a Transmission Configuration Indication-State (TCI-State) configured by a network side, configuration information, or a transmission state.

In a second aspect, a specific embodiment of the present application provides an apparatus for determining a spatial domain transmission filter, including: a determining module, configured to determine a spatial domain transmission filter for a transmission resource according to at least one of a Transmission Configuration Indication-State (TCI-State) configured by a network side, configuration information, or a transmission state.

In a third aspect, a specific embodiment of the present application provides a terminal device, which includes a processor and a memory, wherein the memory stores a program that is runnable on the processor, and when the processor executes the program, any one of the above methods for determining the spatial domain transmission filter is performed.

In a fourth aspect, a specific embodiment of the present application provides a computer-readable storage medium in which a computer program is stored, wherein when the computer program is executed, any one of the above methods for determining the spatial domain transmission filter is performed.

In a fifth aspect, a specific embodiment of the present application provides a computer program product, which is stored in a non-transitory computer-readable storage medium, and when the computer program is executed, any one of the above methods for determining the spatial domain transmission filter is performed.

In a sixth aspect, a specific embodiment of the present application provides a chip, which includes a processor configured to call and run a computer program from a memory, and a device installed with the chip performs any one of the above methods for determining the spatial domain transmission filter.

In a seventh aspect, a specific implementation of the present application provides a computer program, wherein when the computer program is executed, any one of the above methods for determining the spatial domain transmission filter is performed.

Technical solutions provided by the specific embodiments of the present application may include the following beneficial effects: a spatial domain transmission filter for a transmission resource is determined according to at least one of a TCI-State configured by a network side, configuration information, or a transmission state, such that the spatial domain transmission filter for the transmission resource may be determined without relying on spatial relation information, thus solving the technical problem that the spatial domain transmission filter cannot be determined without relying on the spatial relation information.

It should be understood that the above general description and following detailed description are only exemplary and cannot limit the present application.

### Brief Description of Drawings

The accompanying drawings herein are incorporated in this specification, constitute a part of this specification, illustrate specific embodiments in accordance with the present application, and together with the specification serve to explain principles of the present application.
FIG. 1 is a diagram of network architecture of a communication system to which a specific embodiment of the present application may be applied.
FIG. 2 is a flowchart of a method for determining a spatial domain transmission filter according to a specific embodiment of the present application.
FIG. 3 is a flowchart of a method for determining a spatial domain transmission filter according to an embodiment of the present application.
FIG. 4 is a block diagram of an apparatus for implementing a method for determining a spatial domain transmission filter according to various embodiments of the present disclosure.
FIG. 5 is a schematic diagram of a hardware structure of a terminal device for implementing a method for determining a spatial domain transmission filter according to various embodiments of the present disclosure.

### Detailed Description

Exemplary specific embodiments will be described in detail herein, examples of which are shown in the accompanying drawings. When the following description relates to the drawings, unless otherwise stated, the same numbers in different drawings indicate the same or similar elements. Embodiments described in the following exemplary specific embodiments do not represent all embodiments consistent with specific embodiments of the present application. Rather, they are merely examples of methods and apparatuses consistent with some aspects of the present application as detailed in the appended claims. According to the specific embodiments of the present application, all other specific embodiments achieved by a person of ordinary skill in the art without making inventive efforts are within the protection scope of the present application.

A User Equipment may use multiple uplink beams for uplink transmission and/or multiple downlink beams for downlink reception. In a communication system, in order to avoid describing a beam in physical concept directly, a spatial domain transmission filter or a spatial domain reception filter may be used to describe a beam on a terminal side.

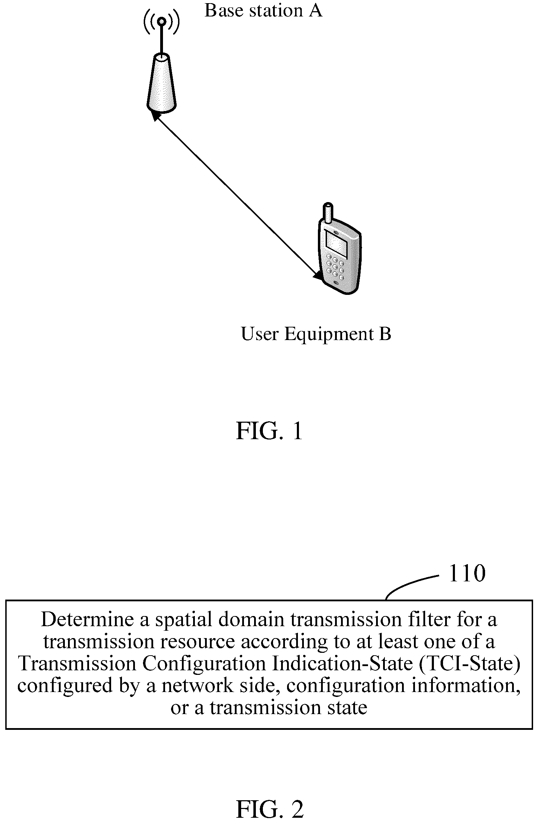

FIG. 1 is system architecture of a communication system to which the following specific embodiments of the present application may be applied. The system architecture includes a base station A and a User Equipment B.

When the base station A instructs the User Equipment B to perform uplink transmission, multiple Sounding Reference Signal (SRS) resources may be configured through a network of the base station A, and the User Equipment B may use different spatial domain transmission filters to transmit signals corresponding to different SRS resources. By measuring SRS signals, the network may know which spatial domain transmission filter has the best transmission effect. Or, when there is beam correspondence on the User Equipment B side, the network obtains a downlink transmission beam with the best effect when transmitting to the User Equipment B, and then obtains a spatial domain transmission filter corresponding to the downlink transmission beam according to the beam correspondence.

Therefore, when the base station A instructs the User Equipment B which spatial domain transmission filter (or which uplink beam) to use for transmission, a spatial domain transmission filter corresponding to an identifier of a signal may be indirectly indicated by indicating the identifier of the signal. This includes an SRS resource indicator, a synchronization signal block (SS/PBCH block, SSB) index, and a Channel State Information Reference Signal (CSI-RS) resource indicator, wherein the SRS resource indicator may include information corresponding to an uplink Bandwidth Part identifier where an SRS resource is located.

With regard to a dynamically scheduled Physical Uplink Shared Channel (PUSCH), if the network of base station A only configures one SRS resource for indicating a spatial domain transmission filter, the User Equipment B determines a spatial domain transmission filter to be used according to network configuration information, such as a corresponding Radio Resource Control (RRC) signaling. If the network configures a plurality of SRS resources for indicating spatial domain transmission filters, the User Equipment B determines a spatial domain transmission filter to be used according to an SRS resource indicated by Downlink Control Information (DCI). With regard to a Semi-Persistent Scheduling PUSCH, if an RRC parameter configuredGrantConfig includes a parameter rrc-ConfiguredUplinkGrant, the User Equipment B determines a spatial domain transmission filter to be used according to an SRS resource indicator indicated in the RRC parameter. If the RRC parameter configuredGrantConfig does not include the parameter rrc-ConfiguredUplinkGrant, the User Equipment B determines a spatial domain transmission filter to be used according to an SRS resource indicated by DCI.

With regard to SRS transmission, by configuring spatial relation information of an SRS, the spatial relation information may indicate that an RRC parameter participates in a signaling format of an SRS resource indicator or a synchronization signal block (SSB, SS/PBCH block) index or a CSI-RS resource indicator, and the SRS resource indicator may include information corresponding to an uplink Bandwidth Part identifier where an SRS resource is located, thereby a corresponding spatial domain transmission filter is indicated according to an identifier of a signal.

With regard to Physical Uplink Control Channel (PUCCH) transmission, by configuring spatial relation information of a PUCCH, the spatial relation information may indicate an SRS resource indicator or an SSB index or a CSI-RS resource indicator through an RRC parameter, wherein the SRS resource indicator may include information corresponding to an uplink Bandwidth Part identifier where an SRS resource is located, thereby a corresponding spatial domain transmission filter is indicated according to the SRS resource indicator, the SSB index, or the CSI-RS resource indicator.

With respect to a PUCCH, if the network is configured with spatial relation information of only one PUCCH (for example, one PUCCH-SpatialRelationInfo is configured), then for all PUCCH resources, a spatial domain transmission filter to be used is determined according to the spatial relation information. The network is configured with spatial relation information of a plurality of PUCCHs, then for each PUCCH resource, a spatial domain transmission filter to be used is determined according to spatial relation information indicated by further indication/configuration/activation information of the network (for example, a Media access Control (MAC) Control Element (CE)).

Configuring spatial relation information by a network side will provide maximum flexibility for a system, but at the same time it will also bring greater signaling overhead to the system. Hence, the network side may not configure the spatial relation information in order to save signaling overhead. However, in an existing method for determining a spatial domain transmission filter, a spatial domain transmission filter for uplink transmission cannot be determined when a network side does not configure spatial relation information. The following specific embodiments of the present application will describe in detail how to determine a spatial domain transmission filter for uplink transmission when a base station A is not configured with spatial relation information.

In this system architecture, the exemplary communication system may be a Global System for Mobile Communications (GSM), a Code Division Multiple Access (CDMA) system, a Time Division Multiple Access (TDMA) system, a Wideband Code Division Multiple Access Wireless (WCDMA), a Frequency Division Multiple Addressing (FDMA) system, an Orthogonal Frequency-Division Multiple Access (OFDMA) system, a Single Carrier FDMA (SC-FDMA) system, a General Packet Radio Service (GPRS) system, an LTE (Long Term Evolution) system, a 5th-Generation (5G) New Radio Access (NR) system, and another such communication system. The exemplary communication system specifically includes a network side device and a terminal. When the terminal accesses a mobile communication network provided by the network side device, the terminal and the network side device may be connected for communication through a wireless link, and a mode of communication connection may be a single connection mode, a double connection mode, or a multiple connection mode. However, when the mode of communication connection is the single connection mode, the network side device may be an LTE base station or an NR base station (also called a gNB base station), and when the mode of communication connection is the double connection mode (specifically, it may be implemented through a Carrier Aggregation (CA) technology or multiple network side devices) and when the terminal is connected to multiple network side devices, the multiple network side devices may be a master base station MCG and a secondary base station SCG, and the base stations perform data backhaul through a backhaul link. The master base station may be an LTE base station, and the secondary base station may be an LTE base station. Or, the master base station may be an NR base station, and the secondary base station may be an LTE base station. Or, the master base station may be an NR base station, and the secondary base station may be an NR base station. A receiving-side RLC entity described in the specific embodiments of the present application may be a terminal or software (such as a protocol stack) and/or hardware (such as a modem) in a terminal. Similarly, the transmitting-side RLC entity may be a network side device or software (such as a protocol stack) and/or hardware (such as a modem) in a network side device.

In specific embodiments of the present application, terms "network" and "system" are often used alternately, but persons skilled in the art may understand the meanings thereof.

A User Equipment related in specific embodiments of the present application may include various devices with wireless connection functions, such as a handheld device, a vehicle-mounted device, a wearable device, a computing device, or another processing device connected to a wireless modem, and various forms of User Equipment (UEs), Mobile Stations (MSs), terminal devices, and the like. For convenience of description, the above-mentioned devices are collectively referred to as terminals.

In addition, terms "system" and "network" are often used interchangeably herein.

A term "and/or" herein is an association relationship describing associated objects only, indicating that three relationships may exist, for example, A and/or B, may indicate three cases: A alone, both A and B, and B alone. In addition, a symbol "/" in this document generally indicates that objects before and after the symbol "/" have an "or" relationship.

It should be understood that in the specific embodiments of the present application, "B corresponding to A" indicates that B is associated with A, and B may be determined according to A. However, it should be further understood that determining B according to A does not mean that B is determined according to A only, and B may be determined according to A and/or other information.

FIG. 2 is a flowchart of a method for determining a spatial domain transmission filter according to a specific embodiment of the present application. As shown in FIG. 2, the method for determining the spatial domain transmission filter is applied to a User Equipment (UE), and may include the following acts.

In act 110, a spatial domain transmission filter for a transmission resource is determined according to at least one of a Transmission Configuration Indication-State (TCI-State) configured by a network side, configuration information, or a transmission state.

Among them, when the UE is receiving a signal, in order to improve reception performance, characteristics of a transmission environment corresponding to data transmission may be used to improve a reception algorithm. For example, design and parameters of a channel estimator may be optimized by using statistical characteristics of a channel. The characteristics of the transmission environment corresponding to data transmission are expressed by Quasi Co-Location (QCL) information.

If downlink transmission comes from different Transmission and Reception Points (TRPs), panels (antenna panels), or beams, the characteristics of the transmission environment corresponding to the data transmission may also change, so the network side will indicate corresponding QCL information to the UE through the TCI-state when transmitting a downlink channel (including a downlink control channel and a downlink data channel) or a downlink signal.

The TCI-State may include the following configurations: a TCI-State identifier which is used to identify a TCI-State, QCL information 1, and QCL information 2 (optional).

The QCL information may include the following information: QCL type configuration, which may include one of QCL typeA, QCL typeB, QCL typeC, and QCL typeD. It may also include QCL reference signal configuration, including a cell identifier where a reference signal is located, a bandwidth part identifier, and an identifier of the reference signal (which may be a CSI-RS resource indicator or an SSB index). If both QCL information 1 and QCL information 2 are configured, a QCL type of at least one piece of QCL information is one of typeA, typeB, and typeC, and a QCL type of another piece of QCL information is QCL typeD.

If a QCL reference signal of a downlink channel or a downlink signal configured by the network side through a TCI-State is a reference CSI-RS resource, or a reference SSB, and a QCL type configuration is typeA or typeB or typeC, then the UE may assume that a large-scale parameter of the downlink signal is the same as that of the reference SSB or the reference CSI-RS resource, and the large-scale parameter is determined through the QCL type configuration.

If a QCL reference signal of a downlink channel or a downlink signal configured by the network side through a TCI-State is a reference CSI-RS resource or a reference SSB, and a QCL type configuration is typeD, the UE may receive the downlink signal by using a same receiving beam as that used for receiving the reference SSB or the reference CSI-RS resource, that is, a reference signal. The downlink channel (or downlink signal) and its reference SSB or reference CSI-RS resource are transmitted by a same TRP, a same panel, or a same beam on the network side. If two downlink signals or downlink channels have different transmission TRPs, different transmission panels, or different transmission beams, different TCI-States will generally be configured.

For a downlink control channel, activation of a TCI-State may be indicated by means of an RRC signaling or an RRC signaling and a Media Access Control (MAC) layer signaling.

For a downlink data channel, an available TCI-State set is indicated through an RRC signaling, and some of TCI-States are activated through a MAC layer signaling. Finally, one or two TCI-states are indicated from activated TCI-states through a TCI-state indication field in DCI, and used for a Physical Downlink Shared Channel (PDSCH) for DCI scheduling. A case of two TCI-States is aimed at a scenario of multiple TRPs.

The spatial domain transmission filter is a spatial domain filter for uplink transmission. The spatial domain transmission filter for the transmission resource is determined according to information contained in the TCI-State configured by the network side. The configuration information and the transmission state may not contain spatial relation information. The configuration information is information of a signal configured by the UE before the UE determines the spatial domain transmission filter, which includes: information of the spatial domain transmission filter for transmission (sending and/or receiving) on the resource, information of a signal to be transmitted, and etc. The transmission state is status information of the UE during previous transmission, which includes a spatial domain transmission filter of the latest PUSCH transmission, a spatial domain transmission filter of the latest PUSCH transmission, and etc. A spatial domain transmission filter for uplink transmission is determined according to the configuration information and/or the transmission state of the UE, such that the spatial domain transmission filter can be determined without relying on the spatial relation information.

In this specific embodiment, determination of the spatial domain transmission filter for the transmission resource according to at least one of the TCI-State configured by the network side, the configuration information, or the transmission state is achieved, thus solving the technical problem that the spatial domain transmission filter cannot be determined independently of the spatial relation information.

In an exemplary specific embodiment, a resource includes a resource that is not configured with corresponding spatial relation information. Therefore, the spatial domain transmission filter for the transmission resource may be determined without relying on the spatial relation information.

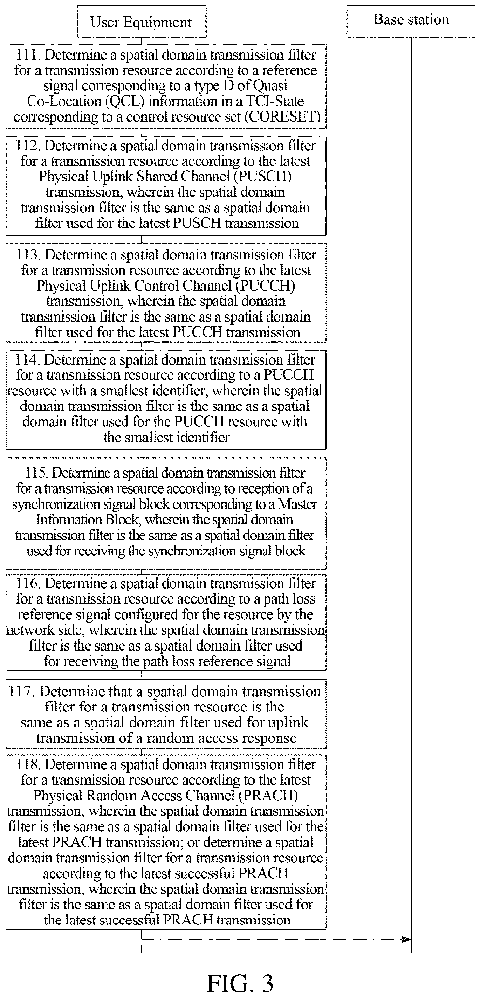

FIG. 3 is a flowchart of a method for determining a spatial domain transmission filter according to an embodiment of the present application. As shown in FIG. 3, the act 110 includes following contents.

The act 110 in the specific embodiment corresponding to FIG. 2 includes acts 111, 112, 113, 114, 115, 116, 117, and 118 in a specific process of an embodiment.

In act 111, a spatial domain transmission filter for a transmission resource is determined according to a reference signal corresponding to typeD of the Quasi Co-Location (QCL) information in a TCI-State corresponding to a control resource set (CORESET).

The CORESET (control resource set) is a resource unit in a New Radio (NR) system, the CORESET may be configured with the corresponding TCI-State, and the TCI-State includes typeD of the QCL information. The spatial domain transmission filter for the transmission resource is determined according to the reference signal corresponding to the typeD.

The CORESET may be a CORESET with a smallest identifier configured in a bandwidth part, by adopting a relatively fixed method, operations of tracking or recording beam changes by the UE is reduced, and processing complexity of the UE is reduced. The CORESET may be a CORESET with a smallest identifier among identifiers greater than 0 and configured in a bandwidth part, so as to exclude a CORESET already existing when the UE initially accesses.

The CORESET may be a CORESET with a smallest identifier in a scheduling carrier, which is used for transmitting Downlink Control Information (DCI) scheduling information, by adopting a relatively fixed method, operations of tracking or recording beam changes by the UE is reduced, and processing complexity of the UE is reduced. The CORESET may be a CORESET with a smallest identifier among identifiers greater than 0 in a scheduling carrier, so as to exclude a CORESET already existing when the UE initially accesses.

The TCI-State is an activated TCI-State corresponding to the CORESET, and the activated TCI-State may be the only TCI-State corresponding to the CORESET, or a TCI-State activated by a MAC Control Element (MAC CE) signaling among multiple TCI-states corresponding to the CORESET.

When no MAC CE signaling is received for activating multiple TCI-States corresponding to CORESET, that is, there is no activated TCI-State corresponding to the CORESET, and at this time, the TCI-State is a TCI-state with a smallest identifier corresponding to the CORESET.

A reference signal corresponding to typeD of QCL information in a TCI-State corresponding to a CORESET includes a Channel State Information Reference Signal (CSI-RS) and/or a Synchronization Signal Block. When the reference signal is a CSI-RS and/or an SSB, a spatial domain transmission filter for a transmission resource is determined to be the same as a spatial domain filter receiving the reference signal according to the reference signal corresponding to the typeD of the QCL information in the TCI-State corresponding to the CORESET.

In specific implementation of this specific embodiment, the UE may be a UE with beam correspondence that does not rely on uplink beam sweeping.

In act 112, a spatial domain transmission filter for a transmission resource is determined according to the latest Physical Uplink Shared Channel (PUSCH) transmission, wherein the spatial domain transmission filter is the same as a spatial domain filter used for the latest PUSCH transmission.

The UE determines the spatial domain transmission filter for the transmission resource according to the latest PUSCH transmission, and the spatial domain transmission filter is the same as a spatial domain filter used for the latest PUSCH transmission. Therefore, when some SRS resources are configured with spatial relation information and used to support uplink PUSCH transmission, an uplink beam dynamic indication is fully utilized to update another uplink beam indication, and a same spatial domain filter is adopted as the spatial domain transmission filter, which increases system flexibility and improves system performance.

In specific implementation of this specific embodiment, the UE may be a UE with beam correspondence that relies on uplink beam sweeping.

In act 113, a spatial domain transmission filter for a transmission resource is determined according to the latest Physical Uplink Control Channel (PUCCH) transmission, wherein the spatial domain transmission filter is the same as a spatial domain filter used for the latest PUCCH transmission.

The UE determines the spatial domain transmission filter for the transmission resource according to the latest PUCCH transmission, and the spatial domain transmission filter is the same as a spatial domain filter used for the latest PUCCH transmission, so that a same spatial domain filter is adopted as the spatial domain transmission filter in a case that some PUCCH resources are configured with spatial relation information, thus reducing complexity of processing of the UE.

In specific implementation of this specific embodiment, the UE may be a UE with beam correspondence that relies on uplink beam sweeping.

In act 114, a spatial domain transmission filter for a transmission resource is determined according to a PUCCH resource with a smallest identifier, wherein the spatial domain transmission filter is the same as a spatial domain filter used for the PUCCH resource with the smallest identifier.

The UE determines the spatial domain transmission filter for the transmission resource according to PUCCH transmission with a smallest identifier, and the spatial domain transmission filter is the same as a spatial domain filter used for the PUCCH transmission with the smallest identifier, thus reducing processing complexity of the UE by using a relatively fixed method. The PUCCH resource with the smallest identifier may be a PUCCH resource with a smallest identifier among identifiers greater than 0, which ensures that the PUCCH resource is a UE dedicated PUCCH resource.

In specific implementation of this specific embodiment, the UE may be a UE with beam correspondence that relies on uplink beam sweeping.

In act 115, a spatial domain transmission filter for a transmission resource is determined according to reception of a synchronization signal block corresponding to a Master Information Block (MIB), wherein the spatial domain transmission filter is the same as a spatial domain filter used for receiving the synchronization signal block.

The UE determines a spatial domain transmission filter according to reception of a synchronization signal block (SS/PBCH block) corresponding to a Master Information Block (MIB). The spatial domain transmission filter is the same as a spatial domain filter used for receiving the synchronization signal block, thus reducing processing complexity of the UE by using a relatively fixed method.

In specific implementation of this specific embodiment, the UE may be a UE with beam correspondence that does not rely on uplink beam sweeping.

In act 116, a spatial domain transmission filter for a transmission resource is determined according to a path loss reference signal configured for the resource by a network side, wherein the spatial domain transmission filter is the same as a spatial domain filter used for receiving the path loss reference signal.

The UE determines the spatial domain transmission filter for the transmission resource according to the path loss reference signal configured for the resource by the network side, wherein the spatial domain transmission filter is the same as the spatial domain filter used for receiving the path loss reference signal, thus keeping an uplink transmission beam consistent with a beam for transmitting the path loss reference signal, ensuring that the uplink transmission beam and path loss calculation correspond well during transmission, avoiding an excessive difference between the two, and further reducing uplink interference in a system. The path loss reference signal may be at least one of a CSI-RS, an SSB, or a positioning reference signal. When there are multiple reference signals, a reference signal with a smallest identifier may be selected as the path loss reference signal.

In specific implementation of this specific embodiment, the UE may be a UE with beam correspondence that relies on uplink beam sweeping.

In act 117, a spatial domain transmission filter for a transmission resource is determined to be the same as a spatial domain filter used for uplink transmission of a Random Access Response (RAR).

The spatial domain transmission filter for the transmission resource is determined to be the same as a spatial domain filter of a Random Access Response (RAR).

In specific implementation of this specific embodiment, the UE may be a UE with beam correspondence that relies on uplink beam sweeping.

In act 118, a spatial domain transmission filter for a transmission resource is determined according to the latest Physical Random Access Channel (PRACH) transmission, wherein the spatial domain transmission filter is the same as a spatial domain filter used for the latest PRACH transmission; or a spatial domain transmission filter for a transmission resource is determined according to the latest successful PRACH transmission, wherein the spatial domain transmission filter is the same as a spatial domain filter used for the latest successful PRACH transmission.

The spatial domain transmission filter for the transmission resource is determined according to the latest Physical Random Access Channel (PRACH) transmission, the spatial domain transmission filter is the same as a spatial domain filter used for the latest PRACH transmission. The latest PRACH transmission may be successful PRACH transmission or unsuccessful PRACH transmission. Or the spatial domain transmission filter for the transmission resource is determined according to the latest successful PRACH transmission, wherein the spatial domain transmission filter is the same as a spatial domain filter used for the latest successful PRACH transmission.

In specific implementation of this specific embodiment, the UE may be a UE with beam correspondence that does not rely on uplink beam sweeping.

This specific embodiment achieves determination of a spatial domain transmission filter for resource transmission.

In an exemplary specific embodiment, the resource may be an SRS resource and/or a positioning reference signal resource supporting positioning. Transmission on the resource may be in a millimeter wave frequency band. An SRS may be an SRS resource supporting codebook transmission, an SRS resource supporting non-codebook transmission, an SRS resource supporting antenna switching, or an SRS resource supporting positioning, wherein the SRS resource supporting positioning may be referred to a positioning reference signal resource consisting of SRS signals and used for supporting positioning. The positioning reference signal resource supporting positioning may be composed of SRS, and therefore may sometimes be referred to as an SRS resource supporting positioning.

Determining a spatial domain transmission filter of an SRS resource may be determining a spatial domain transmission filter for a transmission resource to be the same as a spatial domain filter for receiving a reference signal according to the reference signal corresponding to typeD of QCL information in a TCI-State corresponding to a CORESET.

It may be determined according to the latest Physical Uplink Shared Channel (PUSCH) transmission that a spatial domain transmission filter for a transmission resource is the same as a spatial domain filter used for the latest PUSCH transmission.

It may be determined according to the latest Physical Uplink Control Channel (PUCCH) transmission that a spatial domain transmission filter for a transmission resource is the same as a spatial domain filter used for the latest PUCCH transmission.

It may be determined according to a PUCCH resource with a smallest identifier that a spatial domain transmission filter for a transmission resource is the same as a spatial domain filter used for the PUCCH resource with the smallest identifier.

It may be determined according to reception of a synchronization signal block corresponding to a Master Information Block that a spatial domain transmission filter for a transmission resource is the same as a spatial domain filter used for receiving the synchronization signal block.

It may be determined according to a path loss reference signal configured for a resource by a network side that a spatial domain transmission filter for a transmission resource is the same as a spatial domain filter used for receiving the path loss reference signal.

It may be determined that a spatial domain transmission filter for the transmission resource is the same as a spatial domain filter used for uplink transmission of a random access response.

It may be determined according to the latest Physical Random Access Channel (PRACH) transmission that a spatial domain transmission filter for a transmission resource is the same as a spatial domain filter used for the latest PRACH transmission. Or a spatial domain transmission filter for a transmission resource is determined to be the same as a spatial domain filter used for the latest successful PRACH transmission according to the latest successful PRACH transmission.

In an exemplary specific embodiment, a resource may be an aperiodic SRS resource. When a resource is an aperiodic SRS resource, if DCI that triggers an SRS resource and the SRS resource are not on a same carrier, corresponding spatial relation information must be configured. When the resource is aperiodic SRS resource, the CORESET may be a CORESET carrying the DCI that triggers transmission on the SRS resource, and DCI scheduling information may be DCI that activates the aperiodic SRS resource. Determining a spatial domain transmission filter of an aperiodic SRS resource may be determining a spatial domain transmission filter for a transmission resource is the same as a spatial domain filter receiving a reference signal according to the reference signal corresponding to typeD of QCL information in a TCI-State corresponding to the CORESET carrying the DCI that triggers the transmission on the SRS resource.

In specific implementation of this specific embodiment, the UE may be a UE with beam correspondence that does not rely on uplink beam sweeping.

In an exemplary specific embodiment, a resource may be a PUCCH resource.

The PUCCH resource may be a PUCCH resource determined according to dedicated PUCCH resource configuration of a network side.

Determining a spatial domain transmission filter of a PUCCH resource may be determining a spatial domain transmission filter for a transmission resource to be the same as a spatial domain filter for receiving a reference signal according to the reference signal corresponding to typeD of QCL information in a TCI-State corresponding to a CORESET.

It may be determined according to the latest Physical Uplink Shared Channel (PUSCH) transmission that a spatial domain transmission filter for a transmission resource is the same as a spatial domain filter used for the latest PUSCH transmission.

It may be determined according to the latest Physical Uplink Control Channel (PUCCH) transmission that a spatial domain transmission filter for a transmission resource is the same as a spatial domain filter used for the latest PUCCH transmission.

It may be determined according to a PUCCH resource with a smallest identifier that a spatial domain transmission filter for a transmission resource is the same as a spatial domain filter used for the PUCCH resource with the smallest identifier.

It may be determined according to reception of a synchronization signal block corresponding to a Master Information Block that a spatial domain transmission filter for a transmission resource is the same as a spatial domain filter used for receiving the synchronization signal block.

It may be determined according to a path loss reference signal configured for a resource by a network side that a spatial domain transmission filter for a transmission resource is the same as a spatial domain filter used for receiving the path loss reference signal.

It may be determined that a spatial domain transmission filter for a transmission resource is the same as a spatial domain filter used for uplink transmission of a random access response.

It may be determined according to the latest Physical Random Access Channel (PRACH) transmission that a spatial domain transmission filter for a transmission resource is the same as a spatial domain filter used for the last PRACH transmission. Or a spatial domain transmission filter for a transmission resource is determined to be the same as a spatial domain filter used for the latest successful PRACH transmission according to the latest successful PRACH transmission.

In an exemplary specific embodiment, the PUCCH resource may be a PUCCH resource that carries at least one of aperiodic Channel State Information reporting, Hybrid Automatic Repeat reQuest ACKnowledgment (HARQ-ACK) information corresponding to a Physical Downlink Shared Channel (PDSCH) scheduled by DCI, or HARQ-ACK information corresponding to downlink Semi-Persistent Scheduling release.

The PUCCH resource may be a PUCCH resource that carries at least one of aperiodic Channel State Information reporting (CSI reporting), HARQ-ACK information corresponding to a PDSCH scheduled by DCI, or HARQ-ACK information corresponding to Semi-Persistent Scheduling PDSCH release. At this time, the CORESET is a CORESET carrying a DCI signaling that triggers transmission on a PUCCH resource. A spatial domain transmission filter for a transmission resource is determined to be the same as a spatial domain filter for receiving a reference signal according to the reference signal corresponding to typeD of QCL information in a TCI-State corresponding to the CORESET. A corresponding spatial domain transmission filter is determined by using a downlink transmission beam used by DCI that triggers the aperiodic PUCCH transmission, so that the corresponding spatial domain transmission filter is dynamically updated according to a flexible downlink transmission beam, which increases system flexibility and improves system performance.

In specific implementation of this specific embodiment, the UE may be a UE with beam correspondence that does not rely on uplink beam sweeping.

In an exemplary embodiment, the PUCCH resource may be a PUCCH resource carrying HARQ-ACK information corresponding to a Semi-Persistent Scheduling PDSCH.

The PUCCH resource may be a PUCCH resource carrying HARQ-ACK information corresponding to a Semi-Persistent Scheduling PDSCH. At this time, the CORESET is a CORESET carrying a DCI signaling for activating a Semi-Persistent PDSCH. A spatial domain transmission filter for a transmission resource is determined to be the same as a spatial domain filter for receiving the reference signal according to the reference signal corresponding to typeD of QCL information in a TCI-State corresponding to the CORESET. Therefore, a corresponding spatial domain transmission filter may be updated according to a downlink transmission beam, which increases flexibility of a system and improves system performance.

In specific implementation of this specific embodiment, the UE may be a UE with beam correspondence that does not rely on uplink beam sweeping.

In an exemplary specific embodiment, the PUCCH resource may be a PUCCH resource carrying Semi-Persistent Channel State Information reporting.

The PUCCH resource may be a PUCCH resource carrying Semi-Persistent CSI reporting. At this time, a spatial domain transmission filter for a transmission resource is determined according to a reference signal indicated in a MAC CE that activates Semi-Persistent CSI reporting, wherein the spatial domain transmission filter is the same as a spatial domain filter for receiving the reference signal, or the spatial domain transmission filter is the same as a spatial domain filter for sending the reference signal. The reference signal includes at least one of a CSI-RS, an SSB, or an SRS.

In specific implementation of this specific embodiment, the UE may be a UE with beam correspondence that does not rely on uplink beam sweeping. It may be a UE with beam correspondence that relies on uplink beam sweeping.

In an exemplary specific embodiment, when the reference signal is a channel state information reference signal and/or a synchronization signal block, a spatial domain transmission filter for a transmission resource is determined, wherein the spatial domain transmission filter is the same as a spatial domain filter for receiving the reference signal.

When the reference signal is a CSI-RS and/or an SSB, a spatial domain transmission filter for the transmission resource is determined to be the same as a spatial domain filter for receiving the reference signal.

In specific implementation of this specific embodiment, the UE may be a UE with beam correspondence that does not rely on uplink beam sweeping.

In an exemplary specific embodiment, when the reference signal is an SRS, a spatial domain transmission filter for a transmission resource is determined, and the spatial domain transmission filter is the same as a spatial domain filter for sending the reference signal.

When the reference signal is an SRS, a spatial domain transmission filter for a transmission resource is determined to be the same as a spatial domain filter for sending the reference signal.

In the specific implementation of this specific embodiment, the UE may be a UE with beam correspondence that relies on uplink beam sweeping.

In an exemplary specific embodiment, the UE may be a UE with beam correspondence that does not rely on uplink beam sweeping.

In an exemplary specific embodiment, the UE may be a UE with beam correspondence that relies on uplink beam sweeping.

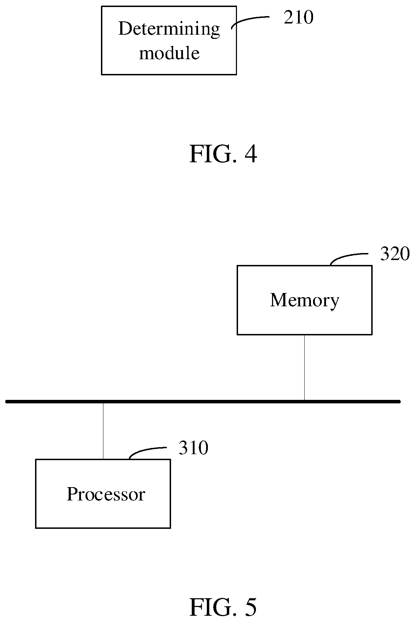

FIG. 4 is a block diagram of an apparatus for implementing a method for determining a spatial domain transmission filter according to various embodiments of the present disclosure. The apparatus performs all or part of the acts of the method for determining the spatial domain transmission filter as shown in FIG. 2. As shown in FIG. 4, the apparatus includes, but is not limited to, a determining module 210.

The determining module is configured to determine a spatial domain transmission filter for a transmission resource according to at least one of a Transmission Configuration Indication-State (TCI-State) configured by a network side, configuration information, or a transmission state.

In an exemplary specific embodiment, the determining module 210 is further configured to determine the spatial domain transmission filter for the transmission resource according to a reference signal corresponding to a type D of Quasi Co-Location (QCL) information in a TCI-State corresponding to a control resource set (CORESET).

In an exemplary specific embodiment, the determining module 210 is further configured to determine the spatial domain transmission filter for the transmission resource according to the latest Physical Uplink Shared Channel (PUSCH) transmission, wherein the spatial domain transmission filter is the same as a spatial domain filter used for the latest PUSCH transmission.

In an exemplary specific embodiment, the determining module 210 is further configured to determine the spatial domain transmission filter for the transmission resource according to the latest Physical Uplink Control Channel (PUCCH) transmission, wherein the spatial domain transmission filter is the same as a spatial domain filter used for the latest PUCCH transmission.

In an exemplary specific embodiment, the determining module 210 is further configured to determine the spatial domain transmission filter for the transmission resource according to a PUCCH resource with a smallest identifier, wherein the spatial domain transmission filter is the same as a spatial domain filter used for the PUCCH resource with the smallest identifier.

In an exemplary specific embodiment, the determining module 210 is further configured to determine the spatial domain transmission filter for the transmission resource according to reception of a synchronization signal block corresponding to a Master Information Block, wherein the spatial domain transmission filter is the same as a spatial domain filter used for receiving the synchronization signal block.

In an exemplary specific embodiment, the determining module 210 is further configured to determine the spatial domain transmission filter for the transmission resource according to a path loss reference signal configured for the resource by a network side, wherein the spatial domain transmission filter is the same as a spatial domain filter used for receiving the path loss reference signal.

In an exemplary specific embodiment, the determining module 210 is further configured to determine the spatial domain transmission filter for the transmission resource is the same as a spatial domain filter used for uplink transmission of a random access response.

In an exemplary specific embodiment, the determining module 210 is further configured to determine the spatial domain transmission filter for the transmission resource according to the latest Physical Random Access Channel (PRACH) transmission, wherein the spatial domain transmission filter is the same as a spatial domain filter used for the latest PRACH transmission; or determine the spatial domain transmission filter for the transmission resource according to the latest successful PRACH transmission, wherein the spatial domain transmission filter is the same as a spatial domain filter used for the latest successful PRACH transmission.

In an exemplary specific embodiment, the determining module 210 is further configured to determine the spatial domain transmission filter for the transmission resource according to a reference signal indicated in a MAC CE that activates Semi-Persistent Channel State Information reporting, wherein the spatial domain transmission filter is the same as a spatial domain filter for receiving the reference signal, or the spatial domain transmission filter is the same as a spatial domain filter for sending the reference signal.

In an exemplary specific embodiment, the determining module 210 is further configured to determine the spatial domain transmission filter for the transmission resource when a reference signal is a Channel State Information Reference Signal and/or a Synchronization Signal Block, wherein the spatial domain transmission filter is the same as a spatial domain filter for receiving the reference signal.

In an exemplary specific embodiment, the determining module 210 is further configured to determine the spatial domain transmission filter for the transmission resource when a reference signal is an SRS, wherein the spatial domain transmission filter is the same as a spatial domain filter for sending the reference signal.

For implementation processes of functions and roles of various modules in the above-mentioned apparatus, reference may be made to the implementation processes of corresponding acts in any method for determining the spatial domain transmission filter provided in the above-mentioned specific embodiments, and will not be described in detail here.

FIG. 5 is a schematic diagram of a hardware structure of a terminal device for implementing a method for determining a spatial domain transmission filter according to various embodiments of the present disclosure. As shown in FIG. 5, the terminal device includes a processor 310 and a memory 320, and the above various components of the terminal device are connected with each other for communication through a bus system.

The processor 310 may be an independent component or a collective name of multiple processing elements. For example, the processor 310 may be a CPU, an ASIC, or one or more integrated circuits configured to implement the above method, such as at least one microprocessor DSP, or at least one FPGA.

The memory 320 stores a program that may be run on the processor 310. When the processor 310 executes the program, part or all of acts of the method for determining the spatial domain transmission filter in specific embodiments of the method are performed.

A specific embodiment of the present application further provides a computer readable storage medium. The computer readable storage medium stores a computer program, wherein when the computer program is executed, part or all of acts of the method for determining the spatial domain transmission filter in specific embodiments of the method are performed.

A specific embodiment of the present application further provides a computer program product, wherein the computer program product is stored in a non-transitory computer readable storage medium, and when the computer program is executed, part or all of acts of the method for determining the spatial domain transmission filter in specific embodiments of the method are performed. The computer program product may be a software installation package.

A specific embodiment of the present application further provides a chip, which includes a processor for calling and running a computer program from a memory, and a device installed with the chip performs part or all of acts of the method for determining the spatial domain transmission filter in specific embodiments of the method.

A specific embodiment of the present application further provides a computer program, wherein part or all of acts of the method for determining the spatial domain transmission filter in specific embodiments of the method are performed when the computer program is executed.

The acts of the methods or algorithms described in the specific embodiments of the present application may be implemented in a hardware manner or may be implemented in a manner in which a processor executes software instructions. The software instructions may be composed of corresponding software modules. The software modules may be stored in a Random Access Memory (RAM), a flash memory, a Read Only Memory (ROM), an Erasable Programmable ROM (EPROM), an Electrically EPROM (EEPROM), a register, a hard disk, a removable hard disk, a Compact Disc ROM (CD-ROM), or a storage medium in any other form well-known in the art. An exemplary storage medium is coupled to a processor such that the processor can read information from the storage medium, and write information to the storage medium. The storage medium may be a component of the processor. The processor and the storage medium may be located in an Application Specific Integrated Circuit (ASIC). In addition, the ASIC may be located in an access network device, a target network device, or a core network device. The processor and the storage medium may act as separate components in the access network device, the target network device, or the core network device.

Those skilled in the art should realize that in one or more examples described above, the functions described in the specific embodiments of the present application may be implemented in whole or in parts through software, hardware, firmware, or any combination thereof. When the functions described in the specific embodiments of the present application are implemented through software, these functions may be implemented in whole or in parts in a form of a computer program product. The computer program product includes one or more computer instructions. When the computer program instructions are loaded and executed on a computer, all or part of the processes or functions described in the specific embodiments of the present application are generated. The computer may be a general purpose computer, a special purpose computer, a computer network, or another programmable apparatus. The computer instructions may be stored in a computer-readable storage medium, or transmitted from one computer-readable storage medium to another computer-readable storage medium, for example, the computer instructions may be transmitted from a website site, a computer, a server, or a data center to another website site, computer, server, or data center through a wired mode (e.g., a coaxial cable, an optical fiber, a Digital Subscriber Line (DSL)), or a wireless mode (e.g., infrared radiation, radio, microwave). The computer-readable storage medium may be any available medium that a computer can access, or a data storage device such as an integrated server or a data center that includes one or more available media. The available medium may be a magnetic medium (e.g., a floppy disk, a hard disk, a magnetic tape), an optical medium (e.g., a Digital Video Disc (DVD)), or a semiconductor medium (e.g., a Solid State Disk (SSD)), or the like.

The specific embodiments described above describe purposes, technical solutions, and beneficial effects of the specific embodiments of the present application in further detail. It should be understood that the above are only specific implementation modes of specific embodiments of the present application, and are not used to limit the protection scope of specific embodiments of the present application. Any modification, equivalent substitution, improvement and the like, made on a basis of technical solutions of specific embodiments of the present application shall be included in the protection scope of specific embodiments of the present application.

It should be understood that the present application is not limited to precise structures already described above and shown in the drawings, and that various modifications and changes may be made without departing from its scope. The scope of the present application is limited only by the appended claims.

In the previous part of the methods and part of the embodiments, corresponding UE types are described, such as a UE with beam correspondence that relies on uplink beam sweeping and/or a UE with beam correspondence that does not rely on uplink beam sweeping. In addition to the limitations described above, all the aforementioned methods and embodiments may be used only for a UE with beam correspondence that relies on uplink beam sweeping. Or, all the aforementioned methods and embodiments may be simultaneously used for a UE with beam correspondence that relies on uplink beam sweeping and a UE with beam correspondence that does not rely on uplink beam sweeping.

## Claims

1. A method for determining a spatial domain transmission filter, which is applied to a terminal device, comprising:
determining (110), by the terminal device, a spatial domain transmission filter for a resource according to a Transmission Configuration Indication-State, TCI-State, configured by a network device in case of spatial relationship information corresponding to the resource not being configured by the network device, wherein the spatial domain transmission filter is used for describing a beam at the terminal device;
wherein the resource comprises: a Sounding Reference Signal, SRS, resource, which is not configured with corresponding spatial relation information; or, the resource comprises: a Physical Uplink Control Channel, PUCCH, resource, which is not configured with corresponding spatial relation information;
wherein the TCI-State comprises an activated TCI-State corresponding to a control resource set, CORESET, with a smallest identifier configured for a bandwidth part.

2. The method according to claim 1, wherein determining the spatial domain transmission filter for the resource according to the TCI-State configured by the network device comprises:
determining (111) the spatial domain transmission filter for the SRS or PUCCH resource according to a reference signal corresponding to Quasi Co-Location, QCL, type D of QCL information included in the TCI-State corresponding to the CORESET;
wherein the reference signal comprises a channel state information reference signal, CSI-RS.

3. The method according to claim 1 or 2, wherein the determining the spatial domain transmission filter for the resource comprises:
determining that the spatial domain transmission filter for the resource is the same as a spatial domain filter for receiving the reference signal.

4. The method according to claim 1, wherein transmission on the resource is in a millimeter wave frequency band.

5. The method according to claim 1, wherein the SRS resource comprises at least one of:
an SRS resource supporting codebook transmission, an SRS resource supporting non-codebook transmission, an SRS resource supporting antenna switching, or an SRS resource supporting positioning.

6. The method according to any one of claims 1 to 5, wherein the resource comprises:
an aperiodic Sounding Reference Signal, SRS, resource.

7. The method according to any one of claims 1 to 6, wherein the PUCCH resource comprises:
a PUCCH resource carrying aperiodic Channel State Information reporting and/or Hybrid Automatic Repeat reQuest ACKnowledgment, HARQ-ACK, information corresponding to a Physical Downlink Shared Channel, PDSCH, scheduled by Downlink Control Information, DCI, and/or HARQ-ACK information corresponding to downlink Semi-Persistent Scheduling PDSCH release;
a PUCCH resource carrying HARQ-ACK information corresponding to a Semi-Persistent Scheduling PDSCH; or
a PUCCH resource carrying Semi-Persistent Channel State Information reporting.

8. The method according to any one of claims 1 to 7, wherein the terminal device comprises:
a terminal device with beam correspondence that does not rely on uplink beam sweeping; or
a terminal device with beam correspondence that relies on uplink beam sweeping.

9. A method for determining a spatial domain transmission filter, comprising:
configuring, by a network device, a Transmission Configuration Indication-State, TCI-State, for a terminal device, the TCI-State being used for the terminal device to determine a spatial domain transmission filter for a resource; wherein the network device does not configure spatial relationship information corresponding to the resource to the terminal device, wherein the spatial domain transmission filter is used for describing a beam at the terminal device;
wherein the TCI-State comprises an activated TCI-State corresponding to a control resource set, CORESET, with a smallest identifier configured for a bandwidth part; wherein the resource comprises: a Sounding Reference Signal, SRS, resource, which is not configured with corresponding spatial relation information; or, the resource comprises: a Physical Uplink Control Channel, PUCCH, resource, which is not configured with corresponding spatial relation information.

10. The method according to claim 9, wherein the TCI-State being used for the terminal device to determine the spatial domain transmission filter for the resource comprises:
a reference signal corresponding to Quasi Co-Location, QCL, type D of QCL information included in the TCI-State corresponding to the CORESET is used for determining the spatial domain transmission filter for the resource, wherein the reference signal comprises a channel state information reference signal, CSI-RS.

11. The method according to 9 or 10, wherein the terminal device determines that the spatial domain transmission filter for the resource is the same as a spatial domain filter for receiving the reference signal.

12. The method according to claim 9, wherein the SRS resource comprises at least one of:
an SRS resource supporting codebook transmission, an SRS resource supporting non-codebook transmission, an SRS resource supporting antenna switching, or an SRS resource supporting positioning.

13. The method according to any one of claims 9 to 12, wherein the PUCCH resource comprises:
a PUCCH resource carrying aperiodic Channel State Information reporting and/or Hybrid Automatic Repeat reQuest ACKnowledgment, HARQ-ACK, information corresponding to a Physical Downlink Shared Channel, PDSCH, scheduled by Downlink Control Information, DCI, and/or HARQ-ACK information corresponding to downlink Semi-Persistent Scheduling PDSCH release;
a PUCCH resource carrying HARQ-ACK information corresponding to a Semi-Persistent Scheduling PDSCH; or
a PUCCH resource carrying Semi-Persistent Channel State Information reporting.

14. The method according to any one of claims 9 to 13, wherein the terminal device comprises:
a terminal device with beam correspondence that does not rely on uplink beam sweeping; or
a terminal device with beam correspondence that relies on uplink beam sweeping.

15. An apparatus for determining a spatial domain transmission filter, configured to perform the method of any one of claims 1 to 8.
